# EUROPEAN PATENT APPLICATION

(11) **EP 4 572 158 A1**
(43) Date of publication of application: **18.06.2025**
(21) Application number: 23890730.7
(22) Date of filing: 13.11.2023
(51) Int. Cl.: H04B 3/54, H04L 12/18, H04L 67/56

(54) **NETWORK ACCESS METHOD AND DEVICE FOR NODE**

(30) Priority: 14.11.2022 CN 202211426256; 28.02.2023 CN 202310233739
(71) Applicant: Huawei Technologies Co., Ltd., Shenzhen, Guangdong 518129 (CN)
(72) Inventor: KONG, Xuepeng, Shenzhen, Guangdong 518129 (CN); PAN, Dao, Shenzhen, Guangdong 518129 (CN); LIN, Zefeng, Shenzhen, Guangdong 518129 (CN); ZHU, Weiwei, Shenzhen, Guangdong 518129 (CN); LI, Qian, Shenzhen, Guangdong 518129 (CN)
(74) Representative: Körber, Martin Hans
(86) International application number: PCT/CN2023/131318
(87) International publication number: WO 2024/104296

(57) **Abstract**

Embodiments of this application provide a method and an apparatus for accessing a network by a node. The method is applied to a power line communication system, and the method includes: A first node sends first request information, where the first request information is used to request a child node in a first domain to become a proxy node of the first node. The first node receives first response information, where the first response information indicates a second node to serve as the proxy node of the first node in the first domain. According to the method provided in this application, a case in which a master in the first domain periodically traverses all nodes in the first domain to determine whether there is a hidden node is avoided. In this application, the first node actively sends the first request information to request the child node in the first domain to become the proxy node of the first node in the first domain, so that a case in which the master traverses all the nodes in the first domain is avoided, a network access delay of the hidden node is reduced, a resource waste caused by periodic traversal is avoided, and communication performance is improved.

## Description

This application claims priority to Chinese Patent Application No. 202310233739.6, filed with the China National Intellectual Property Administration on February 28, 2023 and entitled "METHOD AND APPARATUS FOR ACCESSING NETWORK BY NODE", which is incorporated herein by reference in its entirety.

This application claims priority to Chinese Patent Application No. 202211426256.X, filed with the China National Intellectual Property Administration on November 14, 2022 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a method and an apparatus for accessing a network by a node.

### BACKGROUND

Power line communication (power line communication, PLC), also referred to as a power line network, means transmitting data or information through an existing power line by using a digital signal processing method. In a PLC technology, broadband data is sent through an existing low-frequency (for example, 50 Hz/60 Hz) power line.

In a power line communication system, due to impact of channel attenuation and electrical noise, a part of nodes in a domain may be invisible to a master in the domain. In this case, a proxy node is required to relay beacon information from the master. The hidden node exchanges registration information with the master in the domain through the relay proxy node, to register with and access the domain. Currently, it is specified in a protocol that the relay proxy node is mainly determined by the master in the domain by actively traversing child nodes in the domain to send beacon information.

However, in an internet of things (internet of things, IoT) scenario, there are a large quantity of child nodes (for example, 100 to 200 nodes) in a domain. A master in the domain traverses all the child nodes in the domain, to further detect a hidden node that needs to be proxied. It takes a long time for the master in the domain to perform traversal. Consequently, network access efficiency of the hidden node is low.

Therefore, how to improve network access efficiency of a node becomes a problem that needs to be urgently resolved.

### SUMMARY

Embodiments of this application provide a method and an apparatus for accessing a network by a node. According to the method, a network access delay of the node can be reduced, and communication performance can be improved.

According to a first aspect, a method for accessing a network by a node is provided. The method is applied to a power line communication system, and the method includes: A first node sends first request information, where the first request information is used to request a child node in a first domain to become a proxy node of the first node. The first node receives first response information, where the first response information includes information about a second node in the first domain, and the first response information indicates the second node to serve as the proxy node of the first node in the first domain.

According to the method provided in this application, the first node sends the first request information to child nodes in the first domain, and the request information is used to request the child node in the first domain to become the proxy node of the first node in the first domain. The first node receives the first response information. The first response information indicates the second node to serve as the proxy node of the first node in the first domain, and includes the information about the second node in the first domain. The second node is a child node in the first domain. The first node actively broadcasts the first request information to the child nodes in the first domain, and a master does not need to traverse all the nodes in the first domain, so that a network access delay of a hidden node is reduced, and network access performance of the node is improved.

It should be understood that the first node may be a hidden node in the first domain, or the first node may be a node that is outside the first domain and that wants to access the first domain. This is not specifically limited in this application.

With reference to the first aspect, in some implementations, before that a first node sends first request information, the first node does not receive beacon information from the master in the first domain in a first time period.

Based on the foregoing technical solution, if the first node does not receive the beacon information from the master in the first domain within preset time, the first node sends the first request information. Alternatively, it may be understood as that if the first node does not find the beacon information in the first domain within the preset time, the first node sends the first request information to the child nodes in the first domain.

With reference to the first aspect, in some implementations, that a first node sends first request information includes:
The first node sends the first request information in a first slot, where the first slot is a slot dedicated to transmitting the first request information.

Based on the foregoing technical solution, the first slot is a slot dedicated to sending the first request information, so that overall time for the first node to access the first domain can be shortened, network access efficiency can be improved, and user experience can be improved.

With reference to the first aspect, in some implementations, the first slot is preset; or the first slot is indicated by using control information, and the control information is from the master in the first domain.

It should be understood that the first node sends the first request information in the first slot. The first slot is a slot preset by the system to be dedicated to sending the first request information of the first node, or the first slot is a slot that is indicated by using the control information and that is dedicated to sending the first request information of the first node.

It should be further understood that the first slot is a slot preset by the system to be dedicated to receiving the first request information of the first node, or the first slot is a slot that is indicated by using the control information and that is dedicated to receiving the first request information of the first node.

With reference to the first aspect, in some implementations, that a first node sends first request information includes: The first node receives first information, where the first information carries a first seed value. The first node sends the first request information by using the first seed value.

Based on the foregoing technical solution, the first node may receive any information (for example, the first information) from the first domain. After receiving any information from the first domain, the first node sends the first request information to the child nodes in the first domain by using the first seed value carried in the first information.

It should be understood that when the first node is outside the first domain, communication with the child nodes in the first domain cannot be performed through the first node. The first node sequentially traverses seed values, and attempts to receive any information (for example, the first information) from the first domain. After receiving the first information, the first node sends the first request information to the child nodes in the first domain by using the seed value carried in the first information.

With reference to the first aspect, in some implementations, the first information is from at least one child node in the first domain, or the first information is from a data frame and/or a management frame.

With reference to the first aspect, in some implementations, the method further includes: The first node sends registration request information to the second node based on the information about the second node, where the registration request information is used to request to access the first domain. The first node receives acknowledgment response information, where the acknowledgment response information indicates the first node to access the first domain.

Based on the foregoing technical solution, after receiving the first response information, the first node sends the registration request information to the second node based on the information about the second node in the first response information. The registration request information is used to request to access the first domain. The first node receives the acknowledgment response information. The acknowledgment response information indicates the first node to access the first domain. The first node accesses the first domain based on the acknowledgment response information.

With reference to the first aspect, in some implementations, that the first node sends registration request information to the second node based on the information about the second node includes:
The first node sends the registration request information to the second node based on a receive power of first response information corresponding to any child node in the first domain, where a receive power of first response information corresponding to the second node is greater than or equal to the receive power of the first response information corresponding to the any child node in the first domain, and the any child node includes the second node.

Based on the foregoing technical solution, the first node may further receive first response information of a plurality of child nodes in the first domain. When receiving a plurality of pieces of first response information, the first node further determines, based on receive powers of the first response information, to send the registration request information to the second node. The receive power of the first response information corresponding to the second node is greater than or equal to the receive power of first response information corresponding to the any child node in the first domain. The first node determines the proxy node of the first node based on the receive powers of the first response information, and sends the registration request information to the proxy node, to further ensure network access performance of the first node.

According to a second aspect, a method for accessing a network by a node is provided. The method is applied to a power line communication system, and the method includes:
A second node receives first request information from a first node, where the first request information is used to request a child node in a first domain to become a proxy node of the first node.

The second node sends second information to a master in the first domain based on the first request information, where the second information includes information about the first node.

According to the technical solution provided in this application, after receiving the first request information from the first node, the second node sends the second information to the master in the first domain, and the second information includes the information about the first node. In a conventional technology, the master in the first domain traverses child nodes in the domain to determine whether there is a hidden node. This application is different from the conventional technology in that the first node actively sends the first request information to the second node, and the second node sends, to the master based on the received first request information, the second information including the information about the first node, so that network access efficiency of the hidden node is improved, and a resource waste is avoided.

With reference to the second aspect, in some implementations, the second information indicates that the first node is a hidden node in the first domain, or the second information is used to request the master to determine the proxy node in the first domain for the first node.

With reference to the second aspect, in some implementations, after the second node sends first information to the master, the method further includes:
The second node receives beacon information from the master.

The second node sends first response information to the first node based on the beacon information, where the first response information includes information about the second node in the first domain, and the first response information indicates the second node to serve as the proxy node of the first node in the first domain.

Based on the foregoing technical solution, after receiving the beacon information from the master, the second node sends the first response information to the first node based on the beacon information. The first response information indicates the second node to serve as the proxy node of the first node in the first domain. After receiving the first response information, the first node sends registration request information to the second node based on the first response information, to request to access the first domain.

With reference to the second aspect, in some implementations, the second node receives the registration request information from the first node, where the registration request information is used by the first node to request to access the first domain.

The second node sends the registration request information to the master.

With reference to the second aspect, in some implementations, the second node receives acknowledgment response information from the master, where the acknowledgment response information indicates the first node to access the first domain.

The second node sends the acknowledgment information to the first node.

With reference to the second aspect, in some implementations, that a second node receives first request information from a first node includes:
The second node receives the first request information in a first slot, where the first slot is a slot dedicated to transmitting the first request information.

Based on the foregoing technical solution, the first slot is a slot dedicated to sending the first request information, so that overall time for the first node to access the first domain can be shortened, network access efficiency can be improved, and user experience can be improved.

With reference to the second aspect, in some implementations, the first slot is preset; or the first slot is indicated by using control information, and the control information is from the master in the first domain.

It should be understood that the first node sends the first request information in the first slot. The first slot is a slot preset by the system to be dedicated to sending the first request information of the first node, or the first slot is a slot that is indicated by using the control information and that is dedicated to sending the first request information of the first node.

It should be further understood that the first slot is a slot preset by the system to be dedicated to receiving the first request information of the first node, or the first slot is a slot that is indicated by using the control information and that is dedicated to receiving the first request information of the first node.

With reference to the second aspect, in some implementations, that a second node receives first request information from a first node includes:
The second node receives the first request information from the first node by using a first seed value, where the first seed value is carried in the first information.

With reference to the second aspect, in some implementations, the first information is from at least one child node in the first domain, and the at least one child node includes the second node; or the first information is included in a data frame and/or a management frame.

Based on the foregoing technical solution, the first node may receive any information (for example, the first information) from the first domain. After receiving any information from the first domain, the first node sends the first request information to the child node (for example, the second node) in the first domain by using the first seed value carried in the first information. The second node receives the first request information from the first node by using the first seed value.

According to a third aspect, a method for accessing a network by a node is provided. The method is applied to a power line communication system, and includes:
A master in a first domain receives second information, where the second information includes information about a first node.

The master sends beacon information to a second node based on the second information, where the second node is a proxy node of the first node in the first domain.

According to the method provided in an embodiment of this application, the master receives the second information sent by domain child nodes. The second information includes the information about the first node. The master determines the proxy node of the first node based on the second information, and sends the beacon information to the proxy node. The method provided in an embodiment of this application is different from a conventional technology in that the master does not need to periodically traverse nodes in the domain to obtain information about a hidden node, the hidden node actively broadcasts first request information to the child nodes in the first domain, and the child nodes in the domain send the second information to the master. In this way, a network access delay of the hidden node is reduced, and network access performance of the node is improved.

With reference to the third aspect, in some implementations, the master sends control information. The control information indicates a first slot. The first slot is a slot dedicated to transmitting the first request information. The first request information is used to request a child node in the first domain to become the proxy node of the first node.

It should be understood that the master indicates, by using the control information, the slot dedicated to sending the first request information of the first node, and the first node sends the first request information in the first slot based on the control information. Overall time for the first node to access the first domain can be shortened, network access efficiency can be improved, and user experience can be improved.

With reference to the third aspect, in some implementations, a periodicity at which the master sends the control information is greater than a periodicity at which the master sends the beacon information.

With reference to the third aspect, in some implementations, the second information includes channel state information of at least one child node in the first domain. The channel state information of the at least one child node is used to determine that the second node is a domain proxy node of the first node. The channel state information of the at least one child node includes channel state information of the second node.

It should be understood that the second information may include the channel state information of the child node and/or level information of the child node in the first domain. The level information indicates information about a proxy node, in the first domain, that exists between the child node and the master in the first domain.

It should be further understood that a deeper level in the level information indicates a longer path required for communication between the node and the master, and higher time and bandwidth consumption.

With reference to the third aspect, in some implementations, the master receives registration request information, where the registration request information is used by the first node to request to access the first domain. The master sends acknowledgment response information to the second node based on the registration request information, where the acknowledgment response information indicates the first node to access the first domain.

According to a fourth aspect, an apparatus for accessing a network by a node is provided. The apparatus includes: a transceiver unit, configured to send first request information, where the first request information is used to request a child node in a first domain to become a proxy node of the first node. The transceiver unit is further configured to receive first response information, where the first response information includes information about a second node in the first domain, and the first response information indicates the second node to serve as the proxy node of the first node in the first domain.

With reference to the fourth aspect, in some implementations, before the transceiver unit is further configured to send the first request information, the transceiver unit is further configured to receive no beacon information from a master in the first domain in a first time period.

With reference to the fourth aspect, in some implementations, that the transceiver unit is further configured to send the first request information includes:
The transceiver unit is further configured to send the first request information in a first slot, where the first slot is a slot dedicated to transmitting the first request information.

With reference to the fourth aspect, in some implementations, the first slot is preset; or the first slot is indicated by using control information, and the control information is from the master in the first domain.

With reference to the fourth aspect, in some implementations, that the transceiver unit is further configured to send the first request information includes: The transceiver unit is further configured to receive first information, where the first information carries a first seed value. The transceiver unit is further configured to send the first request information by using the first seed value.

With reference to the fourth aspect, in some implementations, the first information is from at least one child node in the first domain, or the first information is included in a data frame and/or a management frame.

With reference to the fourth aspect, in some implementations, the transceiver unit is further configured to send registration request information to the second node based on the information about the second node, where the registration request information is used to request to access the first domain. The transceiver unit is further configured to receive acknowledgment response information, where the acknowledgment response information indicates the first node to access the first domain.

With reference to the fourth aspect, in some implementations, that the transceiver unit is further configured to send registration request information to the second node based on the information about the second node includes:
The transceiver unit is further configured to send the registration request information to the second node based on receive powers of the first response information, where a receive power of first response information corresponding to the second node is greater than or equal to a receive power of first response information corresponding to any child node in the first domain, and the any child node includes the second node.

According to a fifth aspect, an apparatus for accessing a network by a node is provided. The apparatus includes:
a transceiver unit, configured to receive first request information from a first node, where the first request information is used to request a child node in a first domain to become a proxy node of the first node.

The transceiver unit is further configured to send second information to a master in the first domain based on the first request information, where the second information includes information about the first node.

With reference to the fifth aspect, in some implementations, the second information indicates that the first node is a hidden node in the first domain, or the second information is used to request the master to determine the proxy node in the first domain for the first node.

With reference to the fifth aspect, in some implementations, after the transceiver unit is further configured to send first information to the master, the method further includes:
The transceiver unit is further configured to receive beacon information from the master.

The transceiver unit is further configured to send first response information to the first node based on the beacon information, where the first response information includes information about a second node in the first domain, and the first response information indicates the second node to serve as the proxy node of the first node in the first domain.

With reference to the fifth aspect, in some implementations, the transceiver unit is further configured to receive registration request information from the first node, where the registration request information is used by the first node to request to access the first domain.

The transceiver unit is further configured to send the registration request information to the master.

With reference to the fifth aspect, in some implementations, the transceiver unit is further configured to receive acknowledgment response information from the master, where the acknowledgment response information indicates the first node to access the first domain.

The transceiver unit is further configured to send the acknowledgment information to the first node.

With reference to the fifth aspect, in some implementations, that the transceiver unit is further configured to receive the first request information from the first node includes:
The transceiver unit is further configured to receive the first request information in a first slot, where the first slot is a slot dedicated to transmitting the first request information.

With reference to the fifth aspect, in some implementations, the first slot is preset; or the first slot is indicated by using control information, and the control information is from the master in the first domain.

With reference to the fifth aspect, in some implementations, that the transceiver unit is further configured to receive the first request information from the first node includes:
The transceiver unit is further configured to receive the first request information from the first node by using a first seed value, where the first seed value is carried in the first information.

With reference to the fifth aspect, in some implementations, the first information is from at least one child node in the first domain, and the at least one child node includes the second node; or the first information is included in a data frame and/or a management frame.

According to a sixth aspect, an apparatus for accessing a network by a node is provided. The apparatus includes:
a transceiver unit, configured to receive second information, where the second information includes information about a first node.

The transceiver unit is further configured to send beacon information to a second node based on the second information, where the second node is a proxy node of the first node in a first domain.

With reference to the sixth aspect, in some implementations, the transceiver unit is further configured to send control information. The control information indicates a first slot. The first slot is a slot dedicated to transmitting the first request information. The first request information is used to request a child node in the first domain to become the proxy node of the first node.

With reference to the sixth aspect, in some implementations, the transceiver unit is further configured to send the control information in a periodicity greater than a periodicity at which a master sends the beacon information.

With reference to the sixth aspect, in some implementations, the second information includes channel state information of at least one child node in the first domain. The channel state information of the at least one child node is used to determine that the second node is a domain proxy node of the first node. The channel state information of the at least one child node includes channel state information of the second node.

With reference to the sixth aspect, in some implementations, the master receives registration request information, where the registration request information is used by the first node to request to access the first domain. The transceiver unit is further configured to send acknowledgment response information to the second node based on the registration request information, where the acknowledgment response information indicates the first node to access the first domain.

According to a seventh aspect, a power line communication apparatus is provided. The apparatus is configured to perform the method provided in any one of the first aspect, the second aspect, and the third aspect. Specifically, the apparatus may include a unit and/or a module, for example, a processing unit and/or a transceiver unit (or referred to as a communication unit), configured to perform the method provided in any one of the implementations of the first aspect, the second aspect, and the third aspect.

In an implementation, the apparatus is a communication device (for example, a terminal device or a network device). When the apparatus is a communication device, the communication unit may be a transceiver or a transceiver unit, or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus includes: a memory, configured to store a program; and at least one processor, configured to execute the computer program or instructions stored in the memory, to perform the method provided in any one of the implementations of the first aspect, the second aspect, and the third aspect.

In an implementation, the apparatus is a communication device (for example, a terminal device or a network device).

In another implementation, the apparatus is a chip, a chip system, or a circuit used in a communication device (for example, a terminal device or a network device).

According to a ninth aspect, this application provides a processor, and the processor is configured to perform the methods provided in the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable storage medium stores program code to be executed by a device. The program code is used to perform the method provided in any one of the implementations of the first aspect, the second aspect, and the third aspect.

According to an eleventh aspect, a computer program product including instructions is provided. When the computer program product is run on a computer, the computer is enabled to perform the method provided in any one of the implementations of the first aspect, the second aspect, and the third aspect.

According to a twelfth aspect, a chip is provided. The chip includes a processor and a communication interface. The processor reads, through the communication interface, instructions stored in a memory, to perform the method provided in any one of the implementations of the first aspect, the second aspect, and the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect, the second aspect, and the third aspect.

According to a thirteenth aspect, a communication method is provided, and the method includes:
A first node sends registration request information.

The first node sends first information to a second node, where the first information is used to request registration with the second node, and the second node is determined based on a first channel of the first node.

The first node receives second information from the second node, where the second information is used by the first node to access a network.

According to a fourteenth aspect, a communication method is provided, and the method includes:
A second node receives first information from a first node.

The second node sends second information to the first node, where the second information is used by the first node to access a network.

With reference to the second aspect, in an implementation of the second aspect, before that a second node receives first information from a first node, the method further includes:
The second node sends an RMAP to the first node.

With reference to the fourteenth aspect, in an implementation of the fourteenth aspect, the method further includes:

The second node sends third information to a third node based on the first information.

The second node receives first acknowledgment information from the third node, where the first acknowledgment information includes the second information.

According to a fifteenth aspect, this application provides a communication apparatus. The communication apparatus has a function of implementing the method according to any one of the possible implementations of the thirteenth aspect or the fourteenth aspect. The function may be implemented by hardware, or may be implemented by hardware executing corresponding software. The hardware or the software includes one or more units corresponding to the foregoing function, for example, a processing unit, a receiving unit, or a sending unit.

According to a sixteenth aspect, this application provides a communication device, and the communication device includes at least one processor. The at least one processor is coupled to at least one memory. The at least one memory is configured to store a computer program or instructions. The at least one processor is configured to invoke the computer program or instructions from the at least one memory and run the computer program or instructions, to enable the communication device to perform the method according to any one of the possible implementations of the thirteenth aspect or the fourteenth aspect.

According to a seventeenth aspect, this application provides a communication device, and the communication device includes a processor, a memory, and a transceiver. The memory is configured to store a computer program. The processor is configured to invoke the computer program stored in the memory and run the computer program, and control the transceiver to send/receive a signal, to enable the communication device to perform the method according to any one of the possible implementations of the thirteenth aspect or the fourteenth aspect.

According to an eighteenth aspect, this application provides a communication apparatus, and the communication apparatus includes a processor and a communication interface. The communication interface is configured to receive a signal and transmit the received signal to the processor. The processor processes the signal, to enable the communication apparatus to perform the method according to any one of the possible implementations of the thirteenth aspect or the fourteenth aspect.

Optionally, the communication interface may be an interface circuit, an input/output interface, or the like. The processor may be a processing circuit, a logic circuit, or the like.

Optionally, the communication apparatus according to the fifth aspect may be a chip or an integrated circuit.

According to a nineteenth aspect, this application provides a computer-readable storage medium. The computer-readable storage medium stores computer instructions. When the computer instructions are run on a computer, the method according to any one of the possible implementations of the thirteenth aspect or the fourteenth aspect is performed.

According to a twentieth aspect, this application provides a computer program product. The computer program product includes computer program code. When the computer program code is run on a computer, the method according to any one of the possible implementations of the thirteenth aspect or the fourteenth aspect is performed.

### BRIEF DESCRIPTION OF DRAWINGS

FIG. 1 is a diagram of an architecture of a system applicable to this application;
FIG. 2 is a schematic flowchart of accessing a network by a node according to an embodiment of this application;
FIG. 3 is a schematic flowchart of accessing a network by a hidden node according to an embodiment of this application;
FIG. 4 is a schematic flowchart of accessing a network by a node according to an embodiment of this application;
FIG. 5 is a diagram of node levels according to an embodiment of this application;
FIG. 6 is a block diagram of an apparatus for accessing a network by a node according to an embodiment of this application; and
FIG. 7 is a block diagram of another apparatus for accessing a network by a node according to an embodiment of this application.

### DESCRIPTION OF EMBODIMENTS

The following describes technical solutions in embodiments in this application with reference to accompanying drawings.

The technical solutions in embodiments of this application may be applied to various communication systems, for example, a global system of mobile communication (global system of mobile communication, GSM), a code division multiple access (code division multiple access, CDMA) system, a wideband code division multiple access wireless (wideband code division multiple access wireless, WCDMA) system, a general packet radio service (general packet radio service, GPRS) system, a long term evolution (long term evolution, LTE) system, a wireless local area network (wireless local area network, WLAN), an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) mobile communication system, a new radio access technology (new radio access technology, NR), a future communication system, and the like.

The technical solutions in embodiments of this application may be further applied to a power communication (power line communication, PLC) system. PLC, also referred to as a power line network, means transmitting data or information through an existing power line by using a digital signal processing method. In a PLC technology, broadband data is sent through an existing low-frequency (for example, 50 Hz/60 Hz) power line. The power line communication technology is different from a digital subscriber line (digital subscriber line, DSL) technology in which a telephone line is used and a cable modem (cable modem, CM) using a coaxial cable line of a cable television in that basically no additional network line needs to be laid again, and the power line covers a much wider area than a line of another carrier.

In the power line communication technology, a power line communication modem, also referred to as the "power line communication modem", is a colloquial name for a modem (Modem) that provides broadband network access through a power line. An existing power line and a socket in a home or office are used to establish a network, to connect to a PC, a broadband network access device (for example, an ADSL modem), a set-top box, an audio device, a monitoring device, and another intelligent electrical device to transmit data, voice, and video. The power line communication modem has a plug-and-play feature and can transmit a network IP digital signal through a common home power line.

Currently, a broadband technology for power line communication mainly includes an IEEE Homeplug AV technology and an ITU-T G.hn technology. Both of the foregoing two technologies use an orthogonal frequency-division multiplexing (orthogonal frequency-division multiplexing, OFDM) modulation manner. The OFDM modulation manner has advantages in ensuring stable and complete data transmission in a communication environment with severe electromagnetic interference.

The technical solutions in embodiments of this application mainly use the power line communication system as an example to describe a method for accessing a network by a node provided in this application. The method provided in this application is also applicable to another communication system. This is not specifically limited in this application.

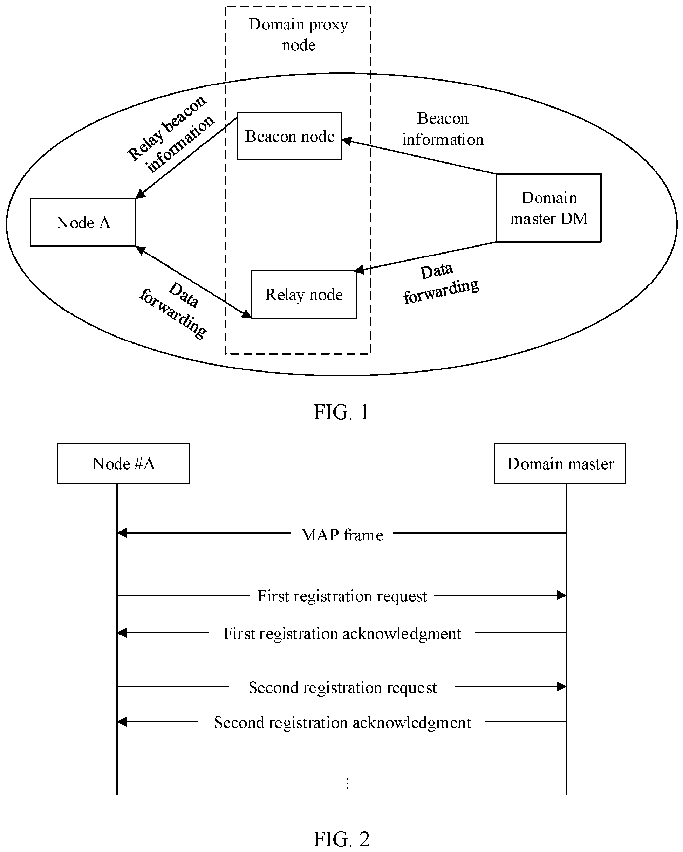

FIG. 1 is a diagram of an architecture of a system applicable to this application. As shown in FIG. 1, the system identifies a domain in a PLC network, and the domain is a network part obtained through logic division of a physical network of PLC. As shown in FIG. 1, the domain includes a plurality of nodes, where the nodes may have different functional roles. For example, the nodes include a domain master (domain master, DM), a relay proxy node, and an ordinary domain child node (node).

For ease of understanding the technical solutions in embodiments of this application, the following specifically describes technical terms in embodiments of this application.

### 1. Domain master DM.

The DM is a primary controller in a domain, and is responsible for managing and coordinating another node in the domain. In a domain working in a beacon mode, the DM implements control and maintenance of the domain by broadcasting beacon (beacon) information (or referred to as a MAC frame). The beacon information may include information such as a bandwidth, a working mode, a domain name, a security level, and frequency band planning.

### 2. Relay proxy node.

The relay proxy node in embodiments of this application can include both a function of a conventional relay node and a function of a conventional beacon proxy. The relay proxy node may be referred to as a beacon proxy node, a relay node, or a proxy node in embodiments of this application.

Currently, the relay node is usually specified by a DM. The relay node is a node having a relay function, and can be used to forward a node service (for example, a data frame, a control frame, and a management frame). For example, as shown in FIG. 1, a service may be forwarded between a node #A and the DM. Due to limitation of a topological connection relationship between nodes in a domain, some domain nodes may not be able to directly receive beacon information sent by the DM. That is, an ordinary domain node cannot directly communicate with the DM. In this case, a domain node may be a hidden node relative to the DM. The DM specifies a proxy node (or referred to as a beacon node or a relay node) for the hidden node. The proxy node regenerates relay beacon information (which may be represented as R-beacon information) again based on the received beacon information sent by the DM, and sends the relay beacon information to the hidden node.

It should be understood that, a domain proxy node in embodiments of this application has a function, of the relay node in FIG. 1, of forwarding a node service, and can also receive the beacon information from the DM, generate relay beacon information, and send the relay beacon information to the hidden node.

FIG. 2 is a schematic flowchart of accessing a network by a node according to an embodiment of this application. As shown in FIG. 2, in a network access procedure of power line communication, a node #A first receives beacon information (for example, a MAP frame) sent by a domain master DM. The MAP frame includes domain information such as a domain name, a domain name identifier (domain name identifier, DOD), and a domain name hash value. After receiving the MAP frame from the DM, the node #A determines, based on domain name information included in the MAP frame, whether a domain is a target domain. After determining that the domain is the target domain based on the domain name information, the node #A completes frequency synchronization and time synchronization by using an NTR. The node #A communicates with the DM to complete a registration process and access a network.

In a process in which the node #A communicates with the DM to complete registration and network access, because channel attenuation and electrical noise exist in power line communication, some nodes in the domain may be invisible to the domain master. In this case, a proxy node in the domain (or referred to as a relay proxy node or a domain relay proxy node) is required to relay the MAP frame from the DM, and a hidden node can exchange registration information with the master in the domain through the proxy node in the domain, to achieve an objective of successful registration and network access of the hidden node.

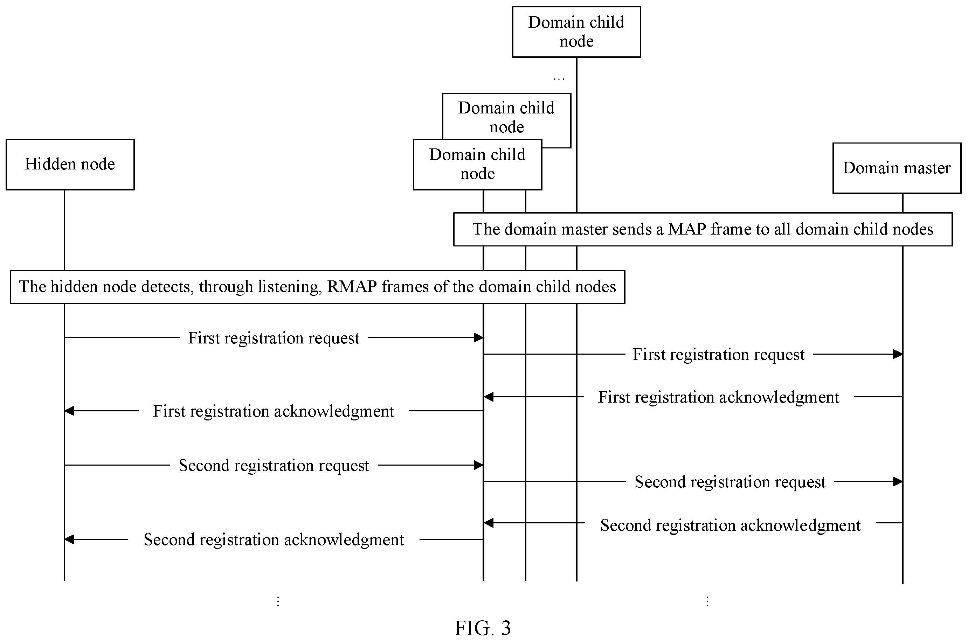

Currently, it is specified in some protocols that the master in the domain actively traverses all child nodes in the domain, the child nodes in the domain send relay beacon information (for example, RMAP frames), and the hidden node completes a process of accessing a network by a hidden node shown in FIG. 3 after detecting, through listening, the RMAP frames from the domain child nodes.

Based on a schematic flowchart of accessing a network by a hidden node shown in FIG. 3, the master in the domain needs to traverse and send the MAP frame to all the child nodes in the domain, to further detect a hidden node that needs to be proxied. In a scenario in which there are a large quantity of child nodes in the domain, it takes a long time for the master to perform traversal. In addition, because the master cannot obtain time at which the hidden node exists, the master needs to periodically traverse the child nodes in the domain, which causes a serious waste of bandwidth resources.

Based on the foregoing existing technical problem, an embodiment of this application provides a method for accessing a network by a node. According to the method, in a scenario in which there are a large quantity of child nodes in a domain, a network access delay of a hidden node can be reduced, and communication performance can be improved.

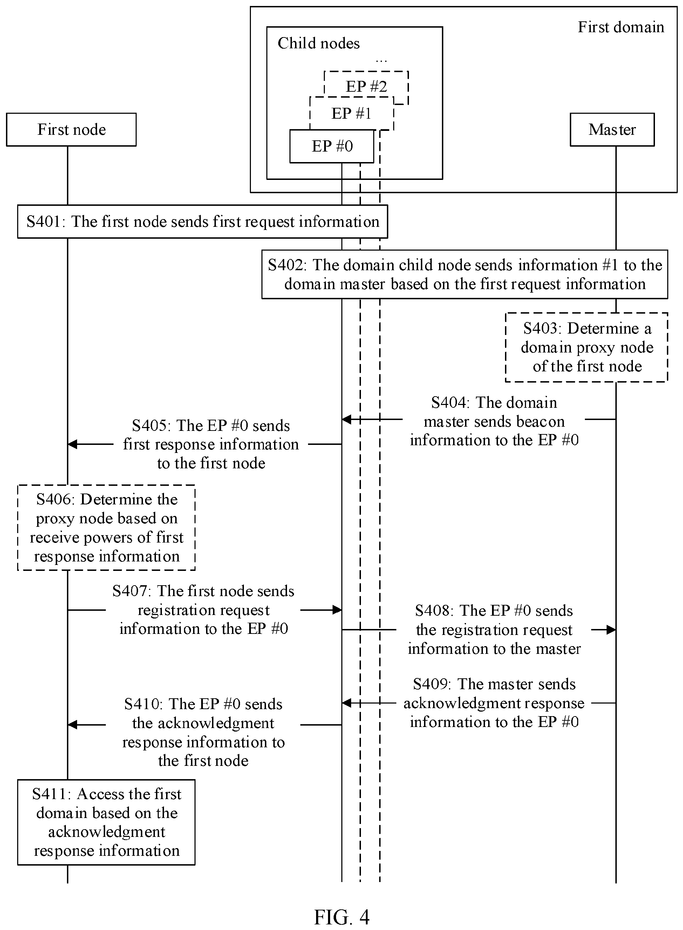

FIG. 4 is a schematic flowchart of accessing a network by a node according to an embodiment of this application. In the method shown in FIG. 4, a first node serves as a hidden node, and an EP #0, an EP #1, and an EP #2 serve as domain child nodes.

As shown in FIG. 4, the method includes the following steps.

S410: The first node sends first request information.

The first request information is used to request a child node in a first domain to become a proxy node of the first node.

It should be understood that, when child nodes in the first domain include the EP #0, the EP #1, and the EP #2, the first node may send the first request information to the EP #0, the EP #1, and the EP #2 in a one-to-many broadcast manner.

It should be further understood that, when the domain child node includes only the EP #0, the first node may send the first request information to the EP #0 in a one-to-one unicast manner.

In an example, a type of a frame used to transmit the first request information (briefly referred to as a first frame) may be an ADM_HiddenNodeRegistrRequest.req type. A frame structure of the first frame includes a target domain name. The target domain name is used by the child node in the first domain to further determine, based on the target domain name in the frame structure after the child node in the first domain receives the first frame, whether a target domain of the first node is the first domain. When the target domain is not the first domain, the child node, in the first domain, that receives the first request information does not respond. When the target domain is the first domain, the child node that receives the first frame sends information #1 to a master in the first domain based on the first request information. The information #1 indicates, to the master, that the first node is a hidden node.

The first frame may further include a MAC address. The MAC address carries a MAC address of the hidden node, and the MAC address is used by the master in the first domain and the child node in the first domain to distinguish sources of the first request information and the information #1. In addition, the MAC address may be further used by the master in the first domain to select an optimal proxy node in the first domain for the first node.

In a possible implementation, the first node sends the first request information in a first slot. The first slot is a slot dedicated for the first request information.

In an example, the master in the first domain indicates, by using control information, the first node to send the first request information in the first slot, or the first slot is preset by a system to be used by the first node to send the first request information. The first node may be determined based on a first time point and a default preamble seed (SEED) value. The first time point is related to a zero-crossing point, and the first time point may be a millisecond after the zero-crossing point.

Correspondingly, the child node in the first domain receives, in the first slot, the first request information from the first node based on the control information of the master, or the child node in the first domain receives, in the first slot, the first request information from the first node based on system presetting.

Optionally, when the master indicates, by using the control information, the first node to send the first request information in the first slot, a periodicity at which the master sends the control information is greater than a periodicity at which the master sends beacon information.

In an example, it is specified in a protocol that a MAC periodicity is 40 ms. The slot is not related to a frame format, duration may be set to 1 ms, and a periodicity at which the slot appears once may be set to four MAC periodicities.

It should be understood that the first node sends the first request information in the first slot, so that a speed at which the first node accesses the first domain can be accelerated, and user experience can be further improved.

Optionally, before the first node sends the first request information, that is, before S401 in the method shown in FIG. 4, the method may further include:
The first node does not receive the beacon information from the master in the first domain in a first time period.

It should be understood that the first time period may be a preset period of time. If the first node does not receive the beacon information from the master in the first domain in preset time, or the first node exceeds a specific time period or fails when searching for the beacon information from the master in the first domain in the time period, the first node sends the first request information to at least one child node in the first domain.

Optionally, before the first node sends the first request information, that is, before S401 in the method shown in FIG. 4, the method may further include:

The first node receives first information, where the first information carries a first seed value.

It should be understood that the first node receives the first information, where the first information may be from the master in the first domain, any child node in the first domain, a data frame, or a management frame. This is not specifically limited in this application.

The first node receives the first information, where the first information carries the first seed value, and the first node sends the first request information to the child node in the first domain by using the first seed value.

It should be understood that, because the node in the first domain further avoids inter-domain signal interference by using a seed value, before receiving the first information, the first node traverses seeds to attempt to receive the first information.

It should be further understood that, after the first node traverses the seeds and receives the first information, where the first information carries a seed value, the first node sends the first request information to at least one child node in the first domain by using the seed value. Alternatively, it may be understood as that a manner in which the first node sends the first request information is a slot preemption manner.

Based on the foregoing manner in which the first node traverses the seed values to receive the first information, and sends the first request information by using the seed value carried in the first information, the first node can independently communicate with a domain (the first domain) when there are a plurality of domains.

S402: The child node in the first domain sends the information #1 to the master based on the first request information.

Specifically, the first node sends the first request information to the child node in the first domain. The child node that receives the first request information from the first node sends the information #1 to the master in the first domain based on the received first request information.

The information #1 includes information about the first node, and the information #1 may further indicate that the first node is a hidden node.

In a possible implementation, the information #1 includes channel state information of the at least one child node in the first domain, and the channel state information of the at least one child node includes channel state information of a second node.

In an example, when the EP #1 and the EP #2 receive the first request information from the first node, the EP #1 and the EP #2 send information #1 to the master based on the received first request information. Alternatively, when only the EP #1 receives the first request information from the first node, the EP #1 sends information #1 to the master based on the received first request information.

S403: The master determines the proxy node of the first node.

Specifically, the child node in the first domain sends the information #1 to the master. Correspondingly, after receiving the information #1 from the child node in the first domain, the master determines the proxy node of the first node based on the information #1.

In a possible implementation, the master determines the proxy node of the first node based on the information #1 and channel state information of the child node in the first domain.

In a possible implementation, the master determines, based on the information #1 and the channel state information of the at least one domain child node, that the second node (for example, the EP #0) in the first domain serves as the proxy node of the first node. The channel state information of the at least one domain child node includes channel state information of the EP #0.

It should be understood that step S403 is an optional step. When the child node in the first domain includes only one node (the second node), the master does not need to determine, based on the information #1 and the channel state information of the child node in the first domain, that the second node serves as the proxy node of the first node.

S404: The master sends the beacon information to the proxy node of the first node.

Specifically, after determining, based on the information #1, that the EP #0 serves as the proxy node of the first node, the master sends the beacon information to the EP #0.

Correspondingly, the EP #0 receives the beacon information from the master.

S405: The EP #0 sends first response information to the first node.

Specifically, after receiving the beacon information from the master, the EP #0 determines the first response information based on the beacon information, and sends the first response information to the first node.

Correspondingly, the first node receives the first response information from the EP #0.

It should be understood that the first response information includes information about the node EP #0 in the first domain. The first response information indicates the EP #0 to serve as the proxy node of the first node.

The first response information includes the information about the node EP #0. The information about the node EP #0 may include one or more of the following: identity information of the node EP #0, channel information corresponding to the node EP #0, level information of the node EP #0, and the like.

In an example, a type of a frame corresponding to the information about the node EP #0 (briefly referred to as a second frame) may be ADM_HiddenNodeExist.req. Dev Id in the second frame is an identity (device id) of the EP #0. MAC Addr in the second frame is a MAC address of the first node (the hidden node). The MAC address is used by the master to distinguish a source of the first request information, and is used by the master to select the optimal proxy node for the first node. snr in the second frame indicates channel information existing when the domain child node (for example, the EP #0) receives a first request message sent by the first node, and is used by the master to select the optimal proxy node for the first node. node lvl in the second frame indicates a level of the EP #0, and is used by the master to select the optimal proxy node for the first node.

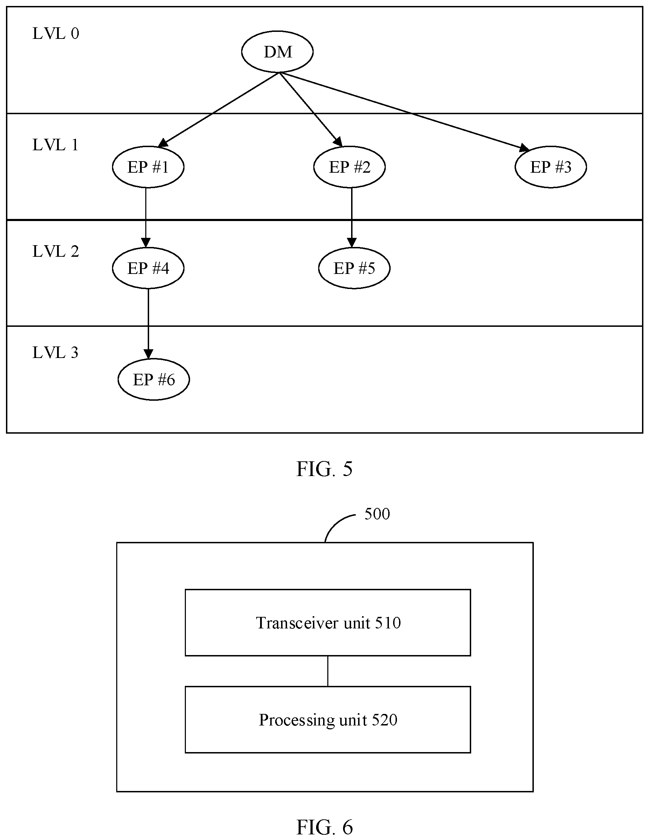

It should be understood that the level information is information about a quantity of proxy nodes, in the first domain, between the child node in the first domain and the master in the first domain. For example, as shown in FIG. 5, a DM represents the domain master, and an EP represents a domain child node. It can be learned that a level corresponding to the DM is 0, and is represented as LVL 0; a level corresponding to the EP #1, the EP #2, and an EP #3 is 1, and is represented as LVL 1; a level corresponding to an EP #4 and an EP #5 is 2, and is represented as LVL 2; and a level corresponding to an EP #6 is 3, and is represented as LVL 3.

In a possible implementation, after receiving first response information from a plurality of child nodes in the first domain, the first node needs to further determine first response information of the proxy node that meets a requirement of the first node, that is, the method shown in FIG. 4, which may further include the following steps.

S406: The first node determines, based on receive powers of the first response information, that the EP #0 is the proxy node of the first node.

It should be understood that, after receiving the first response information from the plurality of domain child nodes, the first node further determines, based on the receive powers of the first response information, that the EP #0 is the proxy node of the first node. The first node determines the proxy node based on the receive powers of the first response information. A child node corresponding to first response information with a largest receive power is the proxy node of the first node.

In an example, the first node receives three pieces of first response information: response information #1, response information #2, and response information #3. If the first node determines that a receive power of the response information #1 is less than a receive power of the response information #2, and the receive power of the response information #2 is less than a receive power of the response information #3, the receive power of the response information #3 is the largest. The response information #3 is sent by the node EP #0. Therefore, the first node determines that the EP #0 is the proxy node.

In another example, both a node #1 and a node #2 are hidden nodes. The master determines, based on information #1, that the EP #2 serves as a domain proxy node of the node #1. The information #1 is information that is determined by at least one child node (including the EP #2) based on first request information of the node #1 and sent to the master. The master determines, based on information #2, that the EP #3 serves as a proxy node of the node #2. The information #2 is information that is determined by at least one domain child node (including the EP #3) based on first request information of the node #2 and sent to the master. When receiving first response information #2 from the EP #2 and first response information #3 from the EP #3, the node #1 determines, based on a receive power of the received first response information #2 and a receive power of the first response information #3, that the receive power of the first response information #2 is larger than the receive power of the first response information #3. Therefore, the node #1 determines that the EP #2 corresponding to the first response information #2 is the proxy node.

It should be understood that when receiving only one piece of first response information, the first node does not need to determine the proxy node based on the receive powers of the first response information. The first node may directly determine the corresponding proxy node based on the received first response information. Step S406 is an optional step.

S407: The first node sends registration request information to the EP #0.

Correspondingly, the EP #0 receives the registration request information from the first node.

Specifically, after the first node determines, based on the received first response information, that the EP #0 is the proxy node of the first node, the first node sends the registration request information to the proxy node EP #0.

The registration request information is used by the first node to request to access the first domain.

S408: The EP #0 sends the registration request information to the master.

Correspondingly, the master receives the registration request information from the EP #0.

It should be understood that the EP #0 receives the registration request information from the first node, and as the proxy node of the first node, the EP #0 sends the registration request information of the first node to the master, so that the registration request information is used by the first node to request to access the first domain.

S409: The master sends acknowledgment response information to the EP #0.

Correspondingly, the EP #0 receives the acknowledgment response information from the master.

Specifically, the master receives the registration request information sent by the EP #0. The registration request information is used by the first node to request to access the first domain. The master sends, to the EP #0 based on the registration request information, the acknowledgment response information for the registration request information. The acknowledgment response information indicates the first node to access the first domain.

S410: The EP #0 sends the acknowledgment response information to the first node.

Correspondingly, the first node receives the acknowledgment response information.

S411: The first node accesses the first domain based on the acknowledgment response information.

Specifically, after receiving the acknowledgment response information, the first node accesses the first domain based on the acknowledgment response information.

According to the method in FIG. 4, the first node actively sends the first request information to request the child node in the first domain to become the proxy node of the first node. The method is different from a conventional technology in that the master does not need to periodically traverse the child nodes in the domain, so that time for the node to access the network is shortened. In addition, the master selects the proxy node in the first domain to provide a relay service for the first node, so that a quantity of network relay proxy nodes is reduced, quality of the domain proxy node is improved, and resource utilization is improved.

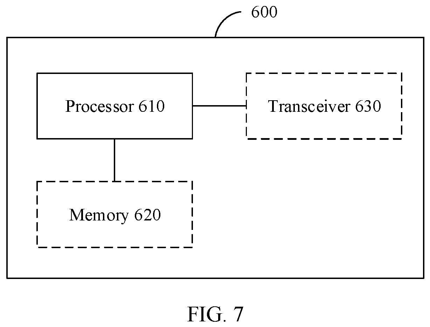

The foregoing describes in detail the method for accessing a network by a node according to embodiments of this application with reference to FIG. 4. The following describes in detail an apparatus for accessing a network by a node according to embodiments of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, some content is not described again.

FIG. 6 is a block diagram of an apparatus for accessing a network by a node according to an embodiment of this application. The apparatus 500 includes a transceiver unit 510 and a processing unit 520. The transceiver unit 510 may be configured to implement a corresponding communication function. The transceiver unit 510 may also be referred to as a communication interface or a communication unit. The processing unit 520 may be configured to implement a corresponding processing function, for example, modifying an address.

Optionally, the apparatus 500 further includes a storage unit. The storage unit may be configured to store instructions and/or data. The processing unit 520 may read the instructions and/or the data in the storage unit, to enable the apparatus to implement actions of a device or a network element in the foregoing method embodiments.

Optionally, the apparatus 500 may further include the processing unit 520, and the processing unit 520 may be configured to perform data processing.

Optionally, the apparatus 500 further includes the storage unit. The storage unit may be configured to store the instructions and/or the data. The processing unit 520 may read the instruction and/or the data in the storage unit, to enable the apparatus to implement actions of different terminal devices in the foregoing method embodiments, for example, actions of the first node.

The apparatus 500 may be configured to perform actions performed by the first node, the second node, or the domain master in the foregoing method embodiments. In this case, the apparatus 500 may be the first node, the second node, or the domain master, or a component of the first node, the second node, or the domain master. The transceiver unit 510 is configured to perform sending-related and receiving-related operations of the first node, the second node, or the domain master in the foregoing method embodiments. The processing unit 520 is configured to perform processing-related operations of the first node, the second node, or the domain master in the foregoing method embodiments.

It should be understood that the apparatus 500 herein is embodied in a form of functional unit. The term "unit" herein may be an application-specific integrated circuit (application-specific integrated circuit, ASIC), an electronic circuit, a processor for executing one or more software or firmware programs (for example, a shared processor, a dedicated processor, or a processor group), a memory, a combinational logic circuit, and/or another suitable component supporting the described functions. In an optional example, a person skilled in the art may understand that the apparatus 500 may be specifically the first node, the second node, or the domain master in the foregoing embodiments, and may be configured to perform procedures and/or steps corresponding to the first node, the second node, or the domain master in the foregoing method embodiments. Alternatively, the apparatus 500 may be specifically the first node, the second node, or the domain master in the foregoing embodiments, and may be configured to perform procedures and/or steps corresponding to the first node, the second node, or the domain master in the foregoing method embodiments. To avoid repetition, details are not described herein again.

The apparatus 500 in the foregoing solutions has a function of implementing the corresponding steps performed by the first node, the second node, or the domain master in the foregoing methods, or the apparatus 500 in the foregoing solutions has a function of implementing the corresponding steps performed by the first node, the second node, or the domain master in the foregoing methods. The function may be implemented by hardware, or may be implemented by hardware executing corresponding software. The hardware or the software includes one or more modules corresponding to the foregoing function. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to respectively perform sending and receiving operations and a related processing operation in the method embodiments.

In addition, the transceiver unit 510 may alternatively be a transceiver circuit (which, for example, may include a receiving circuit and a sending circuit), and the processing unit may be a processing circuit.

It should be noted that the apparatus in FIG. 6 may be the domain master, the second node (the domain child node), or the first node (the hidden node) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a block diagram of another apparatus for accessing a network by a node according to an embodiment of this application. The apparatus 600 includes a processor 610. The processor 610 is configured to execute a computer program or instructions stored in a memory 620, or read data/signaling stored in the memory 620, to perform the method in the foregoing method embodiments. Optionally, there are one or more processors 610.

Optionally, as shown in FIG. 7, the apparatus 600 further includes the memory 620, and the memory 620 is configured to store the computer program or the instructions and/or the data. The memory 620 may be integrated with the processor 610, or may be disposed separately. Optionally, there are one or more memories 620.

Optionally, as shown in FIG. 7, the apparatus 600 further includes a transceiver 630, and the transceiver 630 is configured to receive and/or send a signal. For example, the processor 610 is configured to control the transceiver 630 to receive and/or send a signal.

In a solution, the apparatus 600 is configured to implement operations performed by a network element in the foregoing method embodiments.

For example, the processor 610 is configured to execute the computer program or the instructions stored in the memory 620, to implement related operations in the foregoing method embodiments, for example, the method performed by the first node, and/or the domain child node, and/or the domain master in the embodiment shown in FIG. 4.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

An embodiment of this application further provides a computer-readable storage medium. The computer-readable storage medium stores computer instructions used to implement the method performed by the first node and/or the second node in the foregoing method embodiments.

For example, when a computer program is executed by a computer, the computer is enabled to implement the method performed by the first node and/or the second node in the foregoing method embodiments.

An embodiment of this application further provides a computer program product including instructions. When the instructions are executed by a computer, the method performed by the first node and/or the second node in the foregoing method embodiments is implemented.

An embodiment of this application further provides a communication system, including the foregoing first node and/or the foregoing second node.

For explanations and beneficial effects of related content of any one of the apparatuses provided above, refer to the corresponding method embodiments provided above. Details are not described herein again.

In several embodiments provided in this application, it should be understood that the disclosed apparatuses and methods may be implemented in another manner. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

In addition, functional units in embodiments of this application may be integrated into one processing unit, each of the units may exist alone physically, or two or more units may be integrated into one unit.

The term "and/or" in this application describes only an association relationship between associated objects and represents that three relationships may exist. For example, A and/or B may represent the following three cases: Only A exists, both A and B exist, and only B exists. A, B, and C may all be in a singular form or a plural form, which is not limited. "A plurality of" in this application means two or more.

In embodiments of this application, numbers "first" and "second" are used to distinguish between same items or similar items having basically same functions and functions. A person skilled in the art can understand that "first" and "second" do not limit a quantity or a sequence, and "first", "second", and the like do not limit a necessary difference.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for accessing a network by a node, wherein the method is applied to a power line communication system, and the method comprises:
sending, by a first node, first request information, wherein the first request information is used to request a child node in a first domain to become a proxy node of the first node; and
receiving, by the first node, first response information, wherein the first response information comprises information about a second node in the first domain, and the first response information indicates the second node to serve as the proxy node of the first node in the first domain.

2. The method according to claim 1, wherein before the sending, by a first node, first request information, the first node does not receive beacon information from a master in the first domain in a first time period.

3. The method according to claim 1 or 2, wherein the sending, by a first node, first request information comprises:
sending, by the first node, the first request information in a first slot, wherein the first slot is a slot dedicated to transmitting the first request information.

4. The method according to claim 3, wherein the first slot is preset; or the first slot is indicated by using control information, and the control information is from the master in the first domain.

5. The method according to claim 1 or 2, wherein the method further comprises:
receiving, by the first node, first information, wherein the first information carries a first preamble seed SEED value; and
the sending, by a first node, first request information comprises:
sending, by the first node, the first request information by using the first seed value.

6. The method according to claim 5, wherein the first information is from at least one child node in the first domain, or the first information is comprised in a data frame and/or a management frame.

7. The method according to any one of claims 1 to 6, wherein the method further comprises:
sending, by the first node, registration request information to the second node based on the information about the second node, wherein the registration request information is used to request to access the first domain; and
receiving, by the first node, acknowledgment response information, wherein the acknowledgment response information indicates the first node to access the first domain.

8. The method according to claim 7, wherein the sending, by the first node, registration request information to the second node based on the information about the second node comprises:
sending, by the first node, the registration request information to the second node based on a receive power of the first response information corresponding to any child node in the first domain, wherein a receive power of the first response information corresponding to the second node is greater than or equal to the receive power of the first response information corresponding to the any child node in the first domain, and the any child node comprises the second node.

9. A method for accessing a network by a node, wherein the method is applied to a power line communication system, and the method comprises:
receiving, by a second node, first request information from a first node, wherein the first request information is used to request a child node in a first domain to become a proxy node of the first node; and
sending, by the second node, second information to a master in the first domain based on the first request information, wherein the second information comprises information about the first node.

10. The method according to claim 9, wherein the second information indicates that the first node is a hidden node in the first domain, or the second information is used to request the master to determine the proxy node in the first domain for the first node.

11. The method according to claim 9 or 10, wherein after the second node sends first information to the master, the method further comprises:
receiving, by the second node, beacon information from the master; and
sending, by the second node, first response information to the first node based on the beacon information, wherein the first response information comprises information about the second node in the first domain, and the first response information indicates the second node to serve as the proxy node of the first node in the first domain.

12. The method according to claim 11, wherein the method further comprises:
receiving, by the second node, registration request information from the first node, wherein the registration request information is used by the first node to request to access the first domain; and
sending, by the second node, the registration request information to the master.

13. The method according to claim 12, wherein the method further comprises:
receiving, by the second node, acknowledgment response information from the master, wherein the acknowledgment response information indicates the first node to access the first domain; and
sending, by the second node, the acknowledgment information to the first node.

14. The method according to any one of claims 9 to 13, wherein the receiving, by a second node, first request information from a first node comprises:
receiving, by the second node, the first request information in a first slot, wherein the first slot is a slot dedicated to transmitting the first request information.

15. The method according to claim 14, wherein the first slot is preset; or the first slot is indicated by using control information, and the control information is from the master in the first domain.

16. The method according to any one of claims 9 to 13, wherein the receiving, by a second node, first request information from a first node comprises:
receiving, by the second node, the first request information from the first node by using a first preamble seed SEED value, wherein the first seed value is carried in the first information.

17. The method according to claim 16, wherein the first information is from at least one child node in the first domain, and the at least one child node comprises the second node; or the first information is comprised in a data frame and/or a management frame.

18. A method for accessing a network by a node, wherein the method is applied to a power line communication system, and the method comprises:
receiving, by a master in a first domain, second information, wherein the second information comprises information about a first node; and
sending, by the master, beacon information to the second node based on the second information, wherein the second node is a proxy node of the first node in the first domain.

19. The method according to claim 18, wherein the method further comprises:
sending, by the master, control information, wherein the control information indicates a first slot, the first slot is a slot dedicated to transmitting first request information, and the first request information is used to request a child node in the first domain to become the proxy node of the first node.

20. The method according to claim 19, wherein a periodicity at which the master sends the control information is greater than a periodicity at which the master sends the beacon information.

21. The method according to any one of claims 18 to 20, wherein the second information comprises channel state information of at least one child node in the first domain, the channel state information of the at least one child node is used to determine that the second node is a domain proxy node of the first node, and the channel state information of the at least one child node comprises channel state information of the second node.

22. The method according to any one of claims 18 to 21, wherein the method further comprises:
receiving, by the master, registration request information, wherein the registration request information is used by the first node to request to access the first domain; and
sending, by the master, acknowledgment response information to the second node based on the registration request information, wherein the acknowledgment response information indicates the first node to access the first domain.

23. An apparatus for accessing a network by a node, comprising a processor, wherein the processor is configured to execute a computer program or instructions stored in a memory, to enable the apparatus to perform the method according to any one of claims 1 to 8, or to enable the apparatus to perform the method according to any one of claims 9 to 17, or to enable the apparatus to perform the method according to any one of claims 18 to 22.

24. A system for accessing a network by a node, comprising a first node, a second node, and a master in a first domain, wherein the first node is configured to implement the method according to any one of claims 1 to 8, the second node is configured to implement the method according to any one of claims 9 to 17, and the master is configured to implement the method according to any one of claims 18 to 22.
